(19) Europäisches Patentamt
European Patent Office
Office européen des brevets

(11) **EP 3 106 305 A1**

(12) **EUROPEAN PATENT APPLICATION**

(43) Date of publication:
**21.12.2016 Bulletin 2016/51**

(21) Application number: **15172974.6**

(22) Date of filing: **19.06.2015**

(51) Int Cl.:
**B32B 27/22** *(2006.01)*  **B32B 27/26** *(2006.01)*
**B32B 25/04** *(2006.01)*  **B32B 25/12** *(2006.01)*
**B32B 25/14** *(2006.01)*  **B32B 25/18** *(2006.01)*
**B32B 27/06** *(2006.01)*  **B32B 27/30** *(2006.01)*
**B32B 27/32** *(2006.01)*  **C08J 5/18** *(2006.01)*
**C08K 5/00** *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Hg3 S.a.r.l.**
**2449 Luxembourg (LU)**

(72) Inventor: **The designation of the inventor has not yet been filed**

(74) Representative: **Cabinet Plasseraud**
**66, rue de la Chaussée d'Antin**
**75440 Paris Cedex 09 (FR)**

(54) **FILM BASED ON A COMPOSITION OF POLYMERS AND PLASTICIZERS HAVING A TG RANGING FROM -35°C TO 40°C, ELEMENT INCORPORATING SAID FILM, METHOD FOR MANUFACTURING THEREOF AND USES THEREOF**

(57) The present invention relates to a film based on a composition comprising at least one polymer and at least one plasticizer, said composition having a calculated Tg ranging from -35°C to 40°C, preferably from -20°C to 10°C, said film presenting a rebound resilience according to Test A less than 15%, preferably less than 10%; to a process for its manufacturing and to its uses; it also relates to an element incorporating said film and uses thereof.

EP 3 106 305 A1

**Description**

FIELD OF THE INVENTION

The present invention relates to a film, an element incorporating said film, a method for manufacturing thereof and uses thereof.

BACKGROUND OF THE INVENTION

Packagings are generally used to play 4 different functions:

- to contain the product ;
- to protect the product against shocks , vibrations, any specific stress (weather, static electricity, corrosion, microbial, oxidation, ....);
- to enhance the transportation and handling of the product ;
- to ensure the presentation of the product.

The choice of the packaging depends on the nature of the product, the reason why it needs to be packaged (storage, transportation, gathering of several products, ...), the level of protection needed, the value of the product. In any case, the price of the packaging should be very reduced with respect to the price of the product since it is disposable.
The packaging of a product comprises all the elements which surround the product to ensure its protection, its transportation and/or storage and its presentation. The packaging may comprise several components. These components may be interdependent or totally separated.
The invention relates on packaging for protection during transportation and storage but is not directed to specific packaging for food preservation.
To protect a product against impacts, packaging generally comprises a solid protection and blocking/protecting elements.
The solid protection does not allow a perfect protection of the product against an impact, but ease the storage and handling of the product and its identification. This solid protection can be made of cardboard, wood, moulded plastics. Generally, the volume of said solid protection is far larger than the volume of the product and does not fit with the specific form of the product. To be correctly protected, the product needs an additional protection.
The aim of the additional protection is to limit the movement of the product inside the solid protection and to absorb the energy transmitted by an impact. In general, to combine both an efficient protection and to correctly block the product inside the solid protection, blocking elements are used. However, they are voluminous and not always recyclable. They thus present inconvenients of storage before and after use. They also cause problems of storage and transportation of the packaged product because of the important volume.
Several types of blocking elements are known: particles, plates, blocking particles or fibers, sheets, preformed systems. The space between the solid packaging and the product may be filled with blocking particles, fibers or crumpled sheet. However, the particles, fibers, sheets, etc. need to be stored before and after use and the problem is that their volume is important.
Another way to limit movement and to protect the product against the impacts is to use sheets of bubble-pack, corrugated cardboard, foam sheets (polyurethane, polyethylene, or the like). But for obtaining an efficient protection, large amounts of said products need to be used. The void volume in the solid packaging can also be filled with air cushions, or cushions filled with paper or silk fibers. These cushions are filled just before packaging. Consequently, means for filling need to be near the packaging zone.
Another way to limit the movement of the product inside the solid packaging is to use cardboard, cellulosic or plastic preformed elements adapted, and most generally specific, to the product to be packaged. Pieces of foams, wood, foamed polystyrene can also be used.
Protection methods generally need an important volume, which renders the storage, handling and transportation of the products more difficult.
Foam sheets also exist to protect products that are sensitive to impacts. However, they are not easily adapted to the shape of the produt to protect.
There are also protection nets, i.e. nets for protection against impacts for products which are sensitive to impacts, such as bottles or small mechanical pieces. These nets are thin. They are preferably made of expanded polystyrene or extruded low density polyethylene (LD-PE).
Protective packaging may also protect against specific damages such as static electricity, fire, humidity, acid corrosion, etc.
The evolution of the markets requests also a modification of the packaging method. Products always more fragile, breakable such as electronic components need packaging which protect them efficiently against impact while minimising the volume of the packaging in order to render transportation and handling easier. Furthermore, considering the increase of sale of any type of products on the internet, it is still more important that the packaging be usable to any type of products and be no specific in order to facilitate the preparation of the package. Furthermore, there is a big request on the fact that the packaging be recyclable.

Packaging in the form of films, or wrapping films, is also used to facilitate handling, presentation and storage and to gather several products, and have no impact protection function.

Existing films are stretchable or pre-stretched films and shrinkable films. They allow gathering products together, presentation of the product because films are most often printable but they do not protect the products against impacts or vibrations.

Thus, there exists a need to provide for films for packaging which present high protective performances while being stretchable, easy to use and as thin as possible.

## SUMMARY OF THE INVENTION

The present inventors found that it was possible to provide a film for packaging presenting high protective performances against transmission of mechanical energy, while being very thin and easy to use, thanks to a specific composition of polymers and plasticizers. The invention is based on this specific film composition.

It is an object of the present invention to provide a film, preferably stretchable, which has the ability of absorbing mechanical energy of impacts and vibrations.

According to another aspect, the invention concerns an element incorporating the film according to the invention.

Still another object of the invention concerns a method for manufacturing such a film and the uses of the film and/or the film-incorporating element, for example as packaging element.

## DETAILED DESCRIPTION

The invention thus relates to a film based on a composition comprising at least one polymer and at least one plasticizer, the composition having a calculated glass transition temperature (Tg) ranging between -35°C and 40°C, preferably from -20°C and 10°C, said film presenting a maximum rebound according to Test A less than 15%, preferably less than 10%.

In this application, Tg are measured from a dynamic mechanical analysis test (DMA) and is the maximum of tangent delta peak at 2Hz.

The calculated Tg is the Tg value estimated for miscible polymers by Fox theory, according to the following equation:

$$\frac{1}{Tg} = \sum_{i=1}^{j=10} \frac{x_i}{Tg_i} + \sum_{k=1}^{l=20} \frac{x_k}{Tg_k}$$

with

$$\sum_{i=1}^{j=10} x_i + \sum_{k=1}^{l=20} x_k = 100$$

$Tg_i$ being the measured Tg of each plasticizer i;
$x_i$ being the relative weight amount of each plasticizer i;
$x_k$ being the relative weight amount of each polymer k;
$Tg_k$ being the measured Tg of each polymer k.

In the composition on which the film is based, the polymer is selected from polymers or co-polymers with a Tg ranging from -70°C to 100°C and a loss factor (tan delta) of at least 0.9, preferably at least 1.5, even more preferably at least 2. Examples of such polymers or co-polymers are polynorbornene, butadiene acrylonitrile, polychloropropene, ethylene vinylacetate, vinyl acetate, vinyl acetate-vinyl chloride, polyvinylchloride, butyl rubber, chlorinated isobutylene-isoprene copolymer. In the present application, the term polymer includes polymers and co-polymers, unless otherwise specified.

Only one of said polymer may be used or mixtures of said polymers may be used. Said mixtures may include from 2 to 20 different polymers, in particular 3, 4, 5, 6, 7, 8, 9, or 10 different polymers.

In the composition on which the film is based, the plasticizer is selected among plasticizers which are compatible with the polymers mentioned above.

In the meaning of the present invention, by plasticizer it is meant any plasticizer conventionally used with polymers but also oils and liquid polymers which function as plasticizers in the composition of the invention. In a specific embodiment, the plasticizer can be selected from oils such as paraffinic oil, naphthenic oil, aromatic oil, petroleum resins, terephthalate, silicon oil; classical plasticizers for plasts such as phthalates, epoxides, aliphatic acid diesters, polyesters (adipates, citrates, etc.), phosphates; or liquid polymers such as liquid polymers from butadiene or silicone; and mixtures thereof.

As an example of classical non-phthalate plasticizers, bis(2-ethylhexyl) ester marketed for example under the trademark Eastman® 168 can be cited.

As examples of classical phthalate plasticizers, bis-(2-ethylhexyl) phthalat (DEHP), bis-(methoxyethyl) phthalate (DMEP), butylbenzyl phthalate (BBP), dibutyl phthalate (DBP), diethyl phthalate (DEP); di-isodecyl phthalate (DIDP); diisononyl phthalate (DINP), diisopentyl phthalate (DiPP), di-n-octyl phthalate (DNOP), di-n-pentyl phthalate (DnPP), can be cited.

Only one of said plasticizers may be used or mixtures of said plasticizers may be used. Said mixtures may include 2, 3, 4, 5, 6, 7, 8, 9 or 10 different plasticizers, preferably 2, 3, 4 or 5. More plasticizers could be used, however, it would increase the cost without further enhancing the final properties of the film.

In addition to the at least one polymer with a Tg ranging from -70°C to 100°C and a tan delta of at least 0.9, preferably a least 1.5, even more preferably at least 2 , and to the at least one plasticizer, the composition on which the film according to the invention is based, may further comprise at least a filler, a cross-linking system, an additive and/or mixtures thereof.

The fillers are compounds which improve some physical properties of the film (for example which enhances the strength of the film) and/or lower its cost. Examples of fillers include aluminum oxide, silica, silica minerals such as mica, diatomaceous earth, clay, talc, calcium carbonate, sodium carbonate, wollastonite, vermiculite, pyrophyllite, sauconite, saponite, nontronite, montmorillonite, kaolin diamond, chalk, or mixtures thereof. Clays usable for the adhesive material may be calcined or uncalcined. Clays that may be used as fillers may include clays from the kaolinite, illite, chloritem, smecitite or sepiolite groups, which may be calcinated. The clays may also include minor amounts of other ingredients such as carbonates, feldspaths, micas and quartz. Aramid fibers such as Kevlar® can also be used as filler.

Generally, when a filler is used, the amount thereof ranges from 0 to 20 wt%, preferably from 1 to 15 wt%, more preferably from 2 to 10 wt%.

In the present application, the amounts are given in wt% with respect to the total weight of the composition.

The cross-linking system is used to induce and/or regulate the cross-linking, in particular the temperature at which the cross-linking will start and the degree of cross-linking. The amount and nature of cross-linking system will be adapted depending on the desired uses, degree of cross-linking, cross-linking temperature and duration of the cross-linking.

In the present invention, the cross-linking includes vulcanization, i.e. cases where the cross-linking is induced by the formation of sulphur bridges. Thus the cross-linking system includes the vulcanization systems.

The cross-linking system includes the cross-linking agent alone or in combination with a cross-linking system regulator, i.e. a system composed of one or several agents which accelerates or reduces the cross-linking. Examples of cross-linking agents are peroxides, aromatic amines, vulcanization agents such as sulphur or compounds able to form sulphur linkage such as, for example, tetramethylthiuramdisulfid (TMTD), 2-morpholinodithiobenzothiazol (MBDL), dipentamethylenthiuramtetrasulfid (DPTT), tetraethylthiuramdisulfid (TETD), caprolactamdisulfid (CLD), 4,4'-dithiodimorpholin (DTDM) .

Generally the amount of cross-linking agent ranges from 0 to 5 wt%, preferably from 0.5 to 4 wt%, more preferably 1 to 3 wt%.

Examples of cross-linking agent regulators are N-cyclohexyl-2-benzothiazol (CBS), bis(N,N-dimethylthiocarbamyl),2,2-dibenzothiazyldisulfide (MBTS), tetramethylthiuramdisulfide (TMTD), stearic acid, MgO, metal oxides such as $TiO_2$, ZnO, etc., or mixtures thereof. One particular example of a vulcanization agent regulator which accelerates the vulcanization is sold under trademark Deovulk EG 3, commercially available from King Industries or DOG deutch Oelfabrik. Other examples of cross-linking agent regulators are compounds able to form sulphur linkage cited previously. tetramethylthiuramdisulfid (TMTD), 2-morpholinodithiobenzothiazol (MBDL), dipentamethylenthiuramtetrasulfid (DPTT), tetraethylthiuramdisulfid (TETD) accelerates vulcanization compared to sulphur whereas caprolactamdisulfid (CLD), 4,4'-dithiodimorpholin (DTDM) slow down vulcanization compared to sulphur.

Generally, when a cross-linking agent regulator is used, its amount ranges from 0.01 to 3 wt%, preferably from 0.1 to 1.5 wt%, more preferably 0.2 to 1 wt%.

Additives which are used in the composition on which the film according to the invention is based are well known in the polymer field and are used when specific uses and/or properties are desired.

These additives include but are not limited to an antioxidant, a UV resistant agent, an antiozonant, a flame retardant, a heat stabilizer, a hydrophobic agent, a water absorbent, a colorant, tackiness regulator, a processing aid, a lubricant, a reinforcement (e.g., chopped or continuous glass, ceramic, aramid, or carbon fiber, particulates or the like).

According to a specific embodiment, the film according to the invention is based on a composition comprising:

- 15 to 98%, preferably 30 to 80% of at least one polymer with a Tg ranging from -70°C to 100°C and a loss factor (tan δ) of at least 0.9, preferably of at least 1.5 and even more preferably of at least 2
- 1 to 85%, preferably 20 to 70% of at least one plasticizer;

- 0 to 20%, preferably 1 to 5%, of a filler;
- 0 to 5%, preferably 0.5 to 2%, of a vulcanization system;
- 0 to 5%, preferably 0.5 to 4%, of an additive selected from colorant, protective agent, flame retardant, tackiness regulator, and mixtures thereof.

The specific amounts within said ranges usually depend on the final use of the film and on its composition. Using amounts above the higher limits will increase the price of the film without improving its properties any further.

The thickness of the film according to the invention can vary in a quite wide range. Thickness of the film may range from 0.1 to 10 mm, preferably from 0.2 to 4 mm, and still more preferably may be 0.2 mm, 0.4 mm, 0.6 mm, 0.8 mm, 1.2 mm, 1.6 mm, 2.0 mm or 2.4 mm.

The film according to the invention presents high protective performance. Said performance is represented by the rebound resilience according to Test A which is less than 15%, preferably less than 10%.

Test A being as follows:

Rebound resilience is measured using a Schob pendulum according to standard DIN 53512 (April 2000), at 20°C on a film having a thickness of 0.4 mm, said film being placed on the surface of a plastic test piece having a thickness of 12.5 mm and a rebound resilience of 24% (as measured using a Schob pendulum DIN 53512(April 2000). The film according to the invention has a rebound resilience of less than 15%, preferably less than 10%.

Such a rebound resilience means that about 35%, preferentially about 55% of mechanical energy is absorbed by a film according to the invention having a thickness of 0.4 mm.

According to an advantageous embodiment, the film according to the invention is stretchable. In particular, the film according to the invention, presents an elongation at break of at least 10%, preferably at least 100% and even more preferably at least 300%, and can be as high as 1100%. Said elongation at break being measured according to DIN 53504, i.e. on a test piece having the size mentioned in DIN53504 and not directly on the film but presenting the same composition as the film.

The fact that the film is stretchable renders its use easier and allows an easy wrapping of the products to be protected and/or packaged and it allows a good fitting to the product without increasing its volume.

The film according to the invention may further present at least one of the following properties:

| | |
|---|---|
| Tensile Strength (DIN 53504) | 0.5 to 20 MPa, preferably 0.6 to 15 MPa |
| Density (DIN 1306) | $0.8/1.2$ kg/dm$^3$ |
| Hardness (DIN 53505) | 20-95 shore A |
| 100 % Young's modulus (DIN 53504) | 0.3 to 10 MPa |
| 300 % Young's modulus(DIN 53504) | 0.8 to 13 MPa |
| Tan δ measured by DMA | >0.5 on a range of 30°C, preferably on a range of 40°C in case of efficiency against vibration |

Said properties are not measured directly on the film but on test pieces having the dimensions mentioned in the respective standards.

Furthermore, the film can be self-extinguishing when set to fire, it can be transparent.

The film also presents a controlled tackiness.

In fact, according to the end use, it is possible to obtain a film with one or both surfaces presenting a tackiness which allows the application of a paper film which can be withdrawn, or presenting no tackiness.

Tan δ measured by DMA is representative of the protection against vibrations and impacts.

According to another aspect, the invention relates to a process for manufacturing a film as described above, comprising:

- providing a composition comprising at least one polymer and at least one plasticizer, said composition having a calculated Tg ranging between -35°C and 40°C, preferably from -20°C to 10°C;
- optionally adding to said composition a filler, a cross-linking system, an additive and/or mixtures thereof;
- stretching said composition into a film in a calender at 20 to 120°C, preferably at 30 to 100°C, preferably 40 to 90°C;
- optionally heating the film at a temperature ranging from 100°C to 250°C, preferably from 110°C to 200°C, and even more preferably from 150°C to 170 °C if vulcanization is needed.

The step of stretching the film can be made on a two, three or four roll calender.

For vulcanised products the following step of heating and pressing of the film allows the vulcanization of the material, the duration of said step will depend on the composition of the film, on the type of vulcanization agents, on the vulcanization temperature and and of the thickness of the film. It can be carried out on a Auma Machine. Typically, the duration of said step ranges from 1 min to 10 min, preferably from 2 min to 6 min, and even more preferably from 3 min to 4 min.

Providing the composition comprising at least one polymer and at least one plasticizer, said composition having a calculated Tg ranging between -35°C and 40°C; and optionally adding to said composition a filler, a vulcanization agent, an additive and/or mixtures thereof, may be carried out in one step or may be carried out in several steps of mixing and heating depending of the nature of the components, their compatibility. The mixture obtained at the end of these steps is called a compound.

Said compound is then stretched to obtain a film. A small amount of said compound can be reserved in order to carry some mechanical tests on it.

According to another embodiment, the process according to the invention can comprise a surface treatment on one or both surfaces of the film, in order to modify its surface properties, in particular to control its tackiness, its aspect and/or its odor. Halogenation, mechanical surface treatment, application of chemicals onto the surface (for example with waxes).

According to still another aspect, the invention relates to an element incorporating at least one film as defined above or as prepared according to the method described above.

Such an element can be a multilayer film, at least one of its layer being a film according to the invention. Said multilayer film can be obtained by co-extruding or by laminating different films on each other. The element can be a packaging element (cardboard, moulded polymer, etc.) which is coated by a film according to the invention.

Due to its high protection performance, the film according to the invention and/or the element incorporating said film can be used as wrapping film, protection packaging for transportation companies, removal companies, etc. It is specifically adapted for products which are very sensitive to impacts and/or vibrations, such as dishes, decorative objects, electronic devices, printed circuit boards, etc.

Thanks to the film or element incorporating the film according to the invention, packaging is easy and simple, is not voluminous and confers a high protection.

The film according to the invention and/or the element incorporating said film can also be used as a coating film applied on a device or part of a device which is submitted to vibrations. It can also be wrapped around the grip part of sport devices (for example rackets) or machines (for example air hammer), in order to limit the vibrations transmitted to the person who holds this grip part.

The present invention is described in further details in the below examples, which are only illustrative and are not intended to limit the scope of the invention.

EXAMPLES

The following materials are used in the examples: Norsorex®: polynorbornene

HNA oil: naphthenic oil

Silica MFIL-200: marketed by Konimpex

Resin C9: Aromatic resin marketed by KonimpeX Kaolin Diamond RHO marketed under the trademark Polwhite®

Naftonox®: antioxidant marketed by Rubber Dispersion chemical

Deovulk ®EG3: vulcanization accelerator agent marketed by King Industrie

Chlorbutyl 1240: chlorinated isobutylene-isoprene copolymer marketed by Lanxess

Ruβbatch 00EE55AJ: Mixture of 45.45% carbon black and 34.55% Styrene Butyl Rubber (Flavex 595)

MTBS vulkacit® DM-MG: di(benzothiazol-2-yl)disulphide

TMTD: Tetramethyl Thiuram Disulfide marketed by Konimpex NBR: butadiene acrylonitrile marketed under the trademark Kumbo KNB 40M by Ulsan Synthetic Rubber Plant

PVC: polyvinylchloride marketed under the trademark Solvic® by Solvay

EVA: Ethylene vinyl acetate marketed under the trademark LEVAPRENE 900 from LanxessA-C® by Allied Signal
Eastman 168: Di-Ethylhexyl Ester marketed by Eastman with reference Eastman 168

In the examples, room temperature was about 20°C+/-2°C.

**EXAMPLE 1:**

Composition

| Coumpound | Weight percentage |
|---|---|
| Norsorex® | 22.7% |
| HNA oil | 45.5% |
| Silica MFIL-200 | 8.9% |
| Kaolin Diamond RHO | 6.8% |
| Resine C9 | 11.4% |
| ZnO | 1.0% |
| Acide stéarique | 0.2% |
| Naftonox® (antioxidant) | 0.4% |
| Sulfur | 0.9% |
| Deovulk® EG3 (accelerator) | 2.3% |

With said composition, a compound is prepared by mixing the different components, a part of it is vulcanized at a temperature of 150 ° C during 10 - 12 minutes in a mold for forming sheets in which the test pieces are cutted according to various test standards. Properties are measured on said test pieces. The results of the measured properties are summarized in the following table:

| Property | Value |
|---|---|
| Density (DIN 1306) | 1.10 kg/dm$^3$ |
| Hardness (DIN 53505) | 25 shoreA |
| 100% Young's Modulus (DIN53504) | 0.68 MPa |
| 300% Young's Modulus (DIN53504) | 2.73 MPa |
| Tensile Strength (DIN53504) | 8.09 MPa |
| Rebound resilience (DIN 53512) | 3% |
| Elongation at Break (DIN 53504) | 603% |

The rest of the compound becomes plastified in a mill and then calendered to the desired thickness, using a 3 roll - calender. This pre-heated and pre-formed film becomes vulcanized at 160 °C during 4 minutes in order to obtain films presenting the following thicknesses: 0.4 mm, 0.8 mm, 1.2mm, 1.6 mm, 2.0 mm, 2.4 mm, 2.8 mm and 3.2 mm.

Properties of the obtained films are given in the following table:

| Thickness | Rebound resilience according to Test A | | | | Tg |
|---|---|---|---|---|---|
| | -20°C | 0 | Room temp. | 40°C | |
| 0 mm | | | 24 | | Tg= -5°C at 2Hz |
| 0.4 mm | 12 | 6 | 10 | 8 | |

(continued)

| Thickness | Rebound resilience according to Test A | | | | Tg |
|---|---|---|---|---|---|
| | -20°C | 0 | Room temp. | 40°C | |
| 0.8 mm | | | 4.66 | | |
| 1.2 mm | | | 2.33 | | Tan δ > 0.5 between -20°C to 20°C at 2 Hz |
| 1.6 mm | | | 2 | | |
| 2.0 .4 mm | | | 1.8 | | |
| 2mm | | | 2 | | |
| 2.8 mm | | | 3 | | |
| 3.2 mm | | | 2.6 | | |

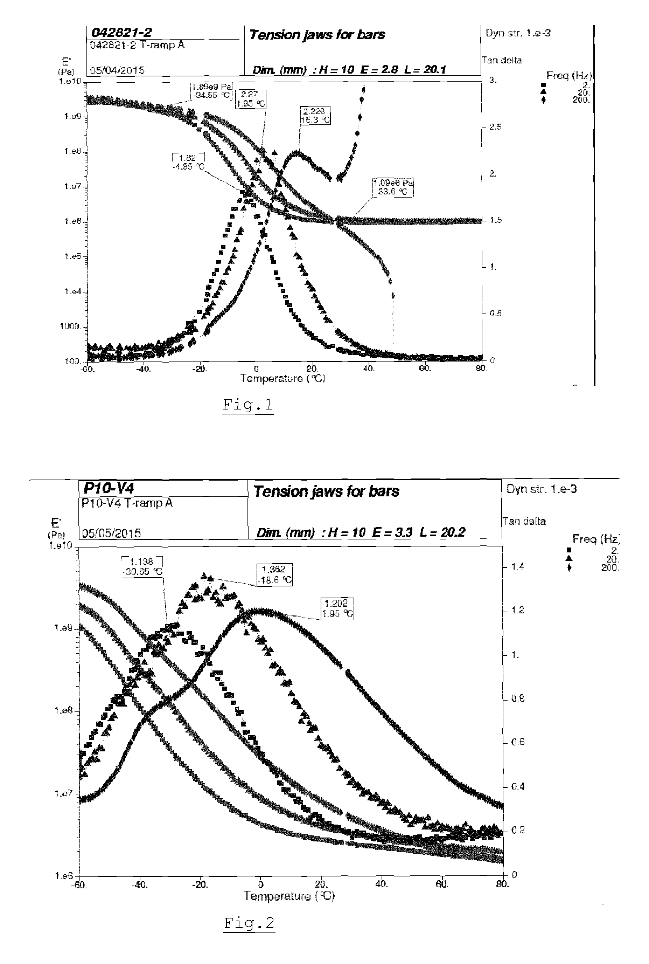

Tan δ is measured from -60°C to 90°C. The results are presented in Figure 1. It results from said figure that tan δ is more than 0.5 on a wide range of temperatures from-20°C to 20°C at 2Hz.

**Example 2:**

Composition

| Compound | percentage |
|---|---|
| Chlorobutylrubber (chlorbutyl 1240) | 72% |
| Rußbatch 00EE55AJ | 2.2% |
| Silica | 15.6% |
| Stearic acid | 3.6% |
| ZnO | 3.6% |
| MBTS/vulkacit DM-MG | 2.1% |
| TMTD | 0.7% |

With said composition, a compound is prepared by mixing the different components, a part of it is vulcanized at a temperature of 150 ° C during 10 - 12 minutes in a mold for test pieces. From said vulcanized test sheet test pieces are cutted, following various test standards. The results of the measured properties are summarized in the following table:

| Properties | Value |
|---|---|
| Density (DIN 1306) | 0.90 kg/dm$^3$ |
| Hardness (DIN 53505) | 25 shoreA |
| 100% Young's Modulus (DIN53504) | 0.39 MPa |
| 300% Young's Modulus (DIN53504) | 0.81 MPa |
| Tensile Strength (DIN53504) | 3.28 MPa |
| Rebound resilience (DIN 53512) | 3% |
| Elongation at Break (DIN 53504) | 1015% |

The rest of the compound becomes plastified in a mill and then calendered to the desired thickness, using a 3 roll - calender. This pre-heated and pre-formed film becomes vulcanized at 160 °C during 4 minutes in order to obtain films presenting the following thicknesses: 0.4 mm, 0.8 mm, 1.2mm, 1.6 mm, 2.0 mm, 2.4 mm, 2.8 mm and 3.2 mm.

Properties of the obtained films are given in the following table:

| Thickness | Rebound resilience according to Test A | | | | Tg /tan $\delta$ max range with tan $\delta$ >0.5 |
|---|---|---|---|---|---|
| | -20°C | 0°C | Room temp. | 40°C | |
| 0 mm | | | 24 | | Tg= -30°C at 2 Hz |
| 0.4 mm | 4 | 2 | 3 | 4 | |
| 0.8 mm | | | 1 | | |
| 1.2 mm | | | 1 | | |
| 1.6 mm | | | <1 | | Tan $\delta$ >0.5 between -40°C to 0°C at 2 Hz |
| 2.0 mm | | | <1 | | |

Tan $\delta$ is measured from -60°C to 90°C. The results are presented in Figure 2. It results from said figure that tan $\delta$ is more than 0.5 on a wide range of temperatures from -40°C to 0°C at 2Hz.

**Example 3:**

Composition

| Compound | percentage |
|---|---|
| NBR | 12.7% |
| PVC | 21.9% |
| EVA | 1.7% |
| Eastman 168 plasticizer | 1.7% |
| Norsorex | 13.0% |
| HNA oil | 25.9% |
| Silica MIFL -200 | 5.1% |
| Kaolin diamond RHO | 3.9% |
| Resin C9 | 6.5% |
| ZnO | 0.6% |
| Stearic acid | 0.1% |
| Naftonox (antioxidant) | 0.2% |
| Woskop | 4.8% |
| Sulfur | 0.5% |
| Deovulk (accelerator) | 1.3% |

With said composition, a compound is prepared by mixing the different components, a part of it is vulcanized at a temperature of 150 ° C during 10 - 12 minutes in a mold for test pieces. From said vulcanized test sheet test pieces are cutted, following various test standards. The results of the measured properties are summarized in the following table:

| Property | Value |
|---|---|
| Density (DIN 1306) | 1.08 kg/dm$^3$ |
| Hardness (DIN 53505) | 67 shoreA |

(continued)

| Property | Value |
|---|---|
| 100% Young's Modulus (DIN53504) | 2.38 MPa |
| 300% Young's Modulus (DIN53504) | 3.87 MPa |
| Tensile Strength (DIN53504) | 4.11 MPa |
| Color | Brawn |
| Rebound resilience (DIN 53512) | 3% |
| Elongation at Break (DIN 53504) | 335% |

The rest of the compound becomes plastified in a mill and then calendered to the desired thickness using a 3 roll - calender. This pre-heated and pre-formed film becomes vulcanized at 160 °C during 4 minutes in order to obtain films presenting the following thicknesses: 0.4 mm, 0.8 mm, 1.2mm, 1.6 mm, 2.0 mm, 2.4 mm, 2.8 mm and 3.2 mm.
Properties of films presenting said different thicknesses are given in the following table:

| Thickness | Rebound resilience according to Test A | | | | $Tg$ /tan $\delta$ max range with tan $\delta$>0.5 |
|---|---|---|---|---|---|
| | -20°C | 0°C | Room temp. | 40°C | |
| 0 mm | | | 24 | | |
| 0.4 mm | 7 | 8 | 2 | 8 | Tg= -7°C and 42°C°C at 2 Hz |
| 0.8 mm | | | <1 | | |
| 1.2 mm | | | <1 | | |
| 1.6 mm | | | <1 | | |
| 2.0 mm | | | <1 | | |

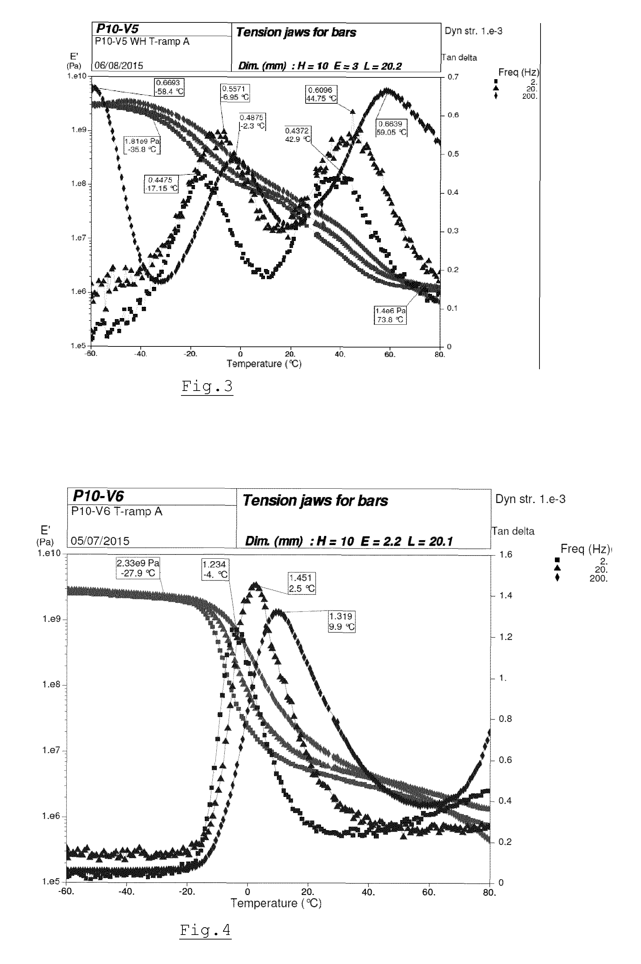

Tan $\delta$ is measured from -60°C to 90°C. The results are presented in Figure 3. It results from said figure that tan $\delta$ is more than 0.5 on a wide range of temperatures from-20°C to 15°C at 2Hz.

Example 4:

Composition:

| Compound | percentage |
|---|---|
| NBR (Kumho KNB 40M) | 78.0 % |
| PVC | 19.0% |
| EVA | 1.5% |
| Eastman 168 plasticizer | 1.5% |

The components of said composition are mixed on a 2 screw intermixer to obtain a plast compound which is extruded and feeded in a heating calender system between 90 to 100°C to obtain a sheet which is cooled and de-stretched, and then cutted in test pieces in accordance to various test standards. The properties are measured on the cutted test pieces. The results of the measured properties are summarized in the following table:

| Property | Value |
|---|---|
| Density (DIN 1306) | 1.00 kg/dm$^3$ |
| Hardness (DIN 53505) | 45 shoreA |

(continued)

| Property | Value |
|---|---|
| 100% Young's Modulus (DIN53504) | - |
| 300% Young's Modulus (DIN53504) | - |
| Tensile Strength (DIN53504) | 0.73 MPa |
| Rebound resilience (DIN 53512) | 5% |
| Elongation at Break (DIN 53504) | 93% |

The rest of the master batch is stretched on 3-roll Calender in order to obtain films presenting the following thicknesses: 0.4 mm, 0.8 mm, 1.2 mm, 1.6 mm, 2.0 mm, 2.4 mm, 2.8 mm and 3.2 mm. Properties of films presenting said different thicknesses are given in the following table:

| Thickness | Rebound resilience according to Test A | | | | Tg /tan δ max range with tan δ>0.5 |
|---|---|---|---|---|---|
| | - 20°C | - 0°C | Room temperature | 40°C | |
| 0 mm | | | 24 | | Tg= -4°C at 2 Hz |
| 0.4 mm | 4 | 4 | 2 | 6 | |
| 0.8 mm | | | <1 | | Tan δ>0.5 between -15°C and 15°C |
| 1.2 mm | | | <1 | | |
| 1.6 mm | | | <1 | | |
| 2.0 mm | | | <1 | | |

Tan δ is measured from -60°C to 90°C. The results are presented in Figure 4. It results from said figure that tan δ is more than 0.5 on a wide range of temperatures from-15°C to 15°C at 2Hz.

**Claims**

1. A film based on a composition comprising at least one polymer and at least one plasticizer, said composition having a calculated Tg ranging from -35°C to 40°C, preferably from -20°C to 10°C, said film presenting a rebound resilience according to Test A less than 15%, preferably less than 10%.

2. The film according to claim 1, which presents an elongation at break of at least 10%, preferably at least 100% and even more preferably at least 300%.

3. The film according to claim 1 or 2, wherein it is based on a composition comprising at least one polymer which is selected from polymers or co-polymers with a Tg ranging from -70°C to 100°C and a tan delta of at least 0.9, preferably at least 1.5 preferably at least 2 and at least one plasticizer and optionally a filler, a cross-linking system, an additive and/or mixtures thereof.

4. The film according to anyone of claims 1 to 3, wherein the polymer is selected from polynorbornene, butadiene acrylonitrile, polychloropropene, ethylene vinylacetate, vinyl acetate, vinyl acetate-vinyl chloride, polyvinylchloride, butyl rubber, chlorinated isobutylene-isoprene copolymer and mixtures thereof.

5. The film according to anyone of claims 1 to 4, wherein the plasticizer is selected from oils such as paraffinic oil, naphthenic oil, aromatic oil, petroleum resins, terephthalate, silicon oil; classical plasticizers for plasts such as phthalates, epoxides, aliphatic acid diesters, polyesters (adipates, citrates, etc.), phosphates; or liquid polymers such as liquid polymers from butadiene or Silicone; and mixtures thereof.

6. The film according to anyone of claims 1 to 5, wherein the composition comprises:

- 15 to 98%, preferably 30 to 80% of at least one polymer with a Tg ranging from -70°C to 100°C and a tan delta of at least 0.9, preferably at least 1.5 preferably at least 2;
- 1 to 85%, preferably 20 to 70% of at least one plasticizer;
- 0 to 20%, preferably 1 to 5%, of a filler;
- 0 to 5%, preferably 0.5 to 2%, of a vulcanization system;
- 0 to 5%, preferably 0.5 to 4%, of an additive selected from colorant, protective agent, flame retardant, tackiness regulator, and mixtures thereof.

7. The film according to anyone of claims 1 to 6, wherein the thickness of the film ranges from 0.1 to 10 mm, preferably from 0.2 to 4 mm, and still more preferably may be 0.2 mm, 0.4 mm, 0.6 mm, 0.8 mm, 1.2 mm, 1.6 mm, 2.0 mm or 2.4 mm.

8. The film according to anyone of claims 1 to 7, which presents an elongation at break measured according to DIN 53504 of at least 10%, preferably at least 100% and even more preferably at least 300%.

9. A process for manufacturing a film according to anyone of claims 1 to 8, comprising:

   - providing a composition comprising at least one polymer and at least one plasticizer, said composition having a calculated Tg ranging between -35°C and 40°C, preferably from -20°C to 10°C;
   - optionally adding to said composition a filler, a cross-linking system, an additive and/or mixtures thereof;
   - stretching said composition into a film in a calender at 20 to 120°C, preferably at 30 to 100°C preferably 40 to 90°C;
   - optionally heating the film at a temperature ranging from 100°C to 250°C, preferably from 110°C to 200°C, and even more preferably from 150° C to 170 °C if vulcanization is needed.

10. The process of claim 9, wherein it further comprises a surface treatment step, in which at least one of the film's surface is treated to modify its tackiness.

11. An element incorporating at least one film as defined in anyone of claims 1 to 8 or as prepared according to the method according to claim 9 or 10.

12. The element according to claim 11 which is a multilayer film, at least one of its layer being a film as defined in anyone of claims 1 to 8 or as prepared according to the method according to claim 9 or 10.

13. Use of a film as defined in anyone of claims 1 to 8 or as prepared according to the method according to claim 9 or 10 or of an element according to claim 11 or 12 for protecting products which are very sensitive to impacts and/or vibrations, such as dishes, decorative objects, electronic devices, printed circuit boards, etc.

14. Use of a film as defined in anyone of claims 1 to 8 or as prepared according to the method according to claim 9 or 10 or of an element according to claim 11 or 12, as a coating applied on a device or part of a device which is submitted to vibrations.

15. Use of a film as defined in anyone of claims 1 to 8 or as prepared according to the method according to claim 9 or 10 or of an element according to claim 11 or 12, for wrapping it around the grip part of sport devices or machines, in order to limit the vibrations transmitted to a person who holds this grip part.

Fig.1

Fig.2

Fig.3

Fig.4

Europäisches
Patentamt

European
Patent Office

Office européen
des brevets

# EUROPEAN SEARCH REPORT

**Application Number**

EP 15 17 2974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 572 676 A1 (GEN PETROCHEMICAL IND LTD [JP]) 8 December 1993 (1993-12-08) * page 2, line 26 - line 46; claims * * Comparative examples; page 3, line 22 - line 36; figures; examples; tables * * page 8, line 40 - line 54 * | 1-15 | INV. B32B27/22 B32B27/26 B32B25/04 B32B25/12 B32B25/14 B32B25/18 B32B27/06 B32B27/30 B32B27/32 C08J5/18 C08K5/00 |
| X | DATABASE WPI Week 201506 Thomson Scientific, London, GB; AN 2015-06282T XP002751892, & CN 104 163 946 A (NINGGUO ZHONGCHEN SEAL CO LTD) 26 November 2014 (2014-11-26) * abstract * | 1-8,11, 13 | |
| X | US 2013/236693 A1 (LU JUN [US]) 12 September 2013 (2013-09-12) * paragraphs [0008], [0027] - [0033] * | 1,11,12 | |
| X | US 4 203 884 A (CORAN AUBERT Y [US] ET AL) 20 May 1980 (1980-05-20) * column 1, line 25 - line 47; claims 1,2,8,19 * * column 4, line 8 - line 53; examples * * column 5, line 42 - line 54 * | 1-8,11, 13,14 | TECHNICAL FIELDS SEARCHED (IPC) B32B C08J C08K |

The present search report has been drawn up for all claims

| Place of search | Date of completion of the search | Examiner |
|---|---|---|
| Munich | 8 December 2015 | Kanetakis, Ioannis |

## ANNEX TO THE EUROPEAN SEARCH REPORT
## ON EUROPEAN PATENT APPLICATION NO.

EP 15 17 2974

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2015

| Patent document cited in search report | | Publication date | Patent family member(s) | | Publication date |
|---|---|---|---|---|---|
| EP 0572676 | A1 | 08-12-1993 | EP | 0572676 A1 | 08-12-1993 |
| | | | JP | H05222248 A | 31-08-1993 |
| | | | WO | 9312176 A1 | 24-06-1993 |
| CN 104163946 | A | 26-11-2014 | NONE | | |
| US 2013236693 | A1 | 12-09-2013 | AU | 2013229947 A1 | 21-08-2014 |
| | | | CA | 2862778 A1 | 12-09-2013 |
| | | | CN | 104144787 A | 12-11-2014 |
| | | | EP | 2822766 A1 | 14-01-2015 |
| | | | JP | 2015515396 A | 28-05-2015 |
| | | | KR | 20140138860 A | 04-12-2014 |
| | | | TW | 201341186 A | 16-10-2013 |
| | | | US | 2013236693 A1 | 12-09-2013 |
| | | | US | 2014363630 A1 | 11-12-2014 |
| | | | US | 2014363644 A1 | 11-12-2014 |
| | | | WO | 2013134602 A1 | 12-09-2013 |
| US 4203884 | A | 20-05-1980 | CA | 1148290 A | 14-06-1983 |
| | | | DE | 3065657 D1 | 29-12-1983 |
| | | | EP | 0018751 A1 | 12-11-1980 |
| | | | JP | S6346103 B2 | 13-09-1988 |
| | | | JP | S55142036 A | 06-11-1980 |
| | | | US | 4203884 A | 20-05-1980 |

EPO FORM P0459

For more details about this annex : see Official Journal of the European Patent Office, No. 12/82